# EUROPÄISCHE PATENTSCHRIFT

(11) **EP 2 045 218 B1**
(45) Veröffentlichungstag und Bekanntmachung des Hinweises auf die Patenterteilung: **28.12.2016**
(21) Anmeldenummer: 08075725.5
(22) Anmeldetag: 22.08.2008
(51) Int. Cl.: C03C 8/08, C04B 41/50, A61K 6/027

(54) **Glasurmasse zum Vergüten von Oberflächen**
Glaze for coating of surfaces
Glaçure destinée au revêtement de surfaces

(30) Priorität: 13.09.2007 DE 102007044845
(43) Veröffentlichungstag der Anmeldung: 08.04.2009
(73) Patentinhaber: Denseo GmbH, 63741 Aschaffenburg (DE)
(72) Erfinder: Yilmaz, Ismail, 63739 Aschaffenburg (DE)
(74) Vertreter: Maikowski & Ninnemann Patentanwälte Partnerschaft mbB

(56) Entgegenhaltungen:
- EP-B- 0 847 375
- WO-A-2007/014571
- JP-A- 2003 026 444

## Beschreibung

Die Erfindung betrifft eine Glasurmasse zum Vergüten von Oberflächen insbesondere von im medizinischen Bereich eingesetzten Keramikwerkstücken. Besonders eignet sich die erfindungsgemäße Glasurmasse zum Verbessern von Oberflächen dentalkeramischer Verblendungen im Bereich der restaurativen Zahnheilkunde.

Die Herstellung von Zahnersatz, wie z. B. von Kronen und Brücken zum Ersatz von verlorenen Zähnen, sowie von Inlays anstelle der bisher verwendeten Amalgam-Füllungen auf Quecksilberbasis, ist ein Feld stetiger technischer Weiterentwicklung. Dabei wird aus technischen und ästhetischen Gründen anstatt der traditionellen Metallprothesen immer mehr Zahnersatz auf Keramikbasis eingesetzt. Künstliche Zähne beispielsweise für Kronen und Brücken können, durch dentalkeramische Massen in mehreren Schichten aufgebrannt, eine hohe Ähnlichkeit zu natürlichen Zähnen erhalten. Keramische Werkstoffe sind dabei nicht nur wegen ihrer ästhetischen Qualität, sondern auch wegen ihrer dem natürlichen Zahn angepassten Härte, Haltbarkeit, Beständigkeit gegen chemische Reaktionen und mangelnde elektrische Leitfähigkeit gegenüber metallischen Werkstoffen bevorzugt.

Traditionellerweise wird Zahnersatz aus Keramik hergestellt, indem auf eine Edelmetallbasis, die dem im Mund verbliebenen Restzahn abgeformt wird, Keramikmassen in mehreren Schichten aufgebrannt werden. Alternativ ist in den letzten Jahren auch die Herstellung von Zahnersatz durch Vollkeramik ohne Metallgerüst immer weiter vorgedrungen.

Ein Nachteil bekannter Dentalkeramiken ist ihre mangelnde Festigkeit. Diese wird mit dem Vorliegen von Mikrorissen in den Keramikmassen erklärt. Diese Mikrorisse haben eine Größe von circa 2 bis 6 Mikrometer und sind ohne optische Hilfsmittel nicht im Keramikwerkstoff erkennbar. Soweit durch unterschiedliche Wärmeausdehnungen in den verwendeten Materialien Spannungen auftreten, können diese Risse sich erweitern und zur mechanischen Destabilisierung des keramischen Zahnersatzes führen. Solche Sprünge können sofort beim Herstellen oder auch in der fertig gestellten Keramik als so genannte Spätsprünge auftreten.

Eine Glasurmasse zur Verbesserung der mechanischen Eigenschaften von Dentalkeramik ist in der europäischen Patentschrift EP 0 847 375 B1 beschrieben.

Bei der Herstellung künstlicher Zähne mit herkömmlichen Keramikmassen kann entweder die Arbeit auf Hochglanz poliert oder aber mit einer Glasurmasse versiegelt werden. Beide Verfahren werden verwendet.

Beim Polieren können kleinste Risse an der Oberfläche der Keramikmasse verbleiben, welche das Eindringen von Substanzen in den keramischen Zahnersatz ermöglichen, wodurch dieser verfärbt oder mechanisch geschwächt werden kann.

Glasurmassen lassen sich schnell auftragen, sind jedoch wegen der Auslaugung von Bestandteilen, welche insbesondere bei Allergikern physiologische Überreaktionen auslösen können, umstritten. Weiterhin werden viele Glasurmassen nach längerer Tragezeit angelöst oder weggebissen.

Die meisten Hersteller bieten Verblendkeramiksortimente an, deren Massen mehr oder weniger aufeinander abgestimmt sind. Nicht jede Verblendung kann dabei mit jeder beliebigen Glasurmasse überzogen werden. Meist besteht eine enge Abhängigkeit zwischen einer Glasurmasse und dem dazugehörigen Keramiksortiment.

Künstliche Zähne sind Einzelstücke, die individuell nach dem Patienten abgenommenen Formen der Kieferanatomie des Patienten hergestellt werden. Die Herstellung solcher Einzelstücke ist sehr arbeitsintensiv. Wenn sich nach dem Brennen herausstellt, dass das hergestellte Werkstück nicht die gewünschte Farbe aufweist, muss es meist verworfen werden, da eine nachträgliche Umfärbung nicht möglich ist. Es wäre also vorteilhaft, Verfahren zur Verfügung zu haben, mit denen eine einmal hergestellte Dentalkeramik farblich modifiziert werden kann.

Dentalmassen zum Verblenden sind in den Drucksschriften EP 1 167 311 A1, EP 1 170 261 A1 oder EP 1 329 430 A1 beschrieben. Bei diesen Massen handelt es sich nicht speziell um Glasurmassen zur Verblendung von Dentalkeramik. Diese Massen weisen über 50% Siliziumdioxid auf. Solche Zusammensetzungen, insbesondere mit Lithiumdisilikat, werden oft bei pressbaren Massen für Gerüste verwendet.

Herkömmliche Glasurmassen sind reine Gläser oder Leuzit-Glaskeramiken.

Vor dem dargestellten Stand der Technik ist es Aufgabe der vorliegenden Erfindung, eine Glasurmasse sowie ein Verfahren zum Aufbringen derselben zur Verfügung zu stellen, welche die Dentalkeramik optimal versiegelt, über lange Zeit chemisch und mechanisch stabil ist und auf vielen verschiedenen Verbundkeramiken zur Herstellung von künstlichen Zähnen aufgebracht werden kann.

Gelöst wird diese Aufgabe durch eine Glasurmasse und ein Verfahren gemäß den Merkmalen der unabhängigen Ansprüche.

Die erfindungsgemäße Glasurmasse weist einen Gehalt von Siliziumoxid (SiO₂) von 30 bis 55 Massenprozent auf. Insbesondere enthält die erfindungsgemäße Glasurmasse im Gegensatz zu den aus dem Stand der Technik bekannten Glasurmassen kein oder nur sehr geringe Mengen von Lithiumdisilikat.

Die erfindungsgemäße Glasurmasse enthält Phosphat, wodurch sie dem natürlichen Zahn in seinen Eigenschaften nahe kommt und zugleich durch ihre Materialeigenschaften auf verschiedenen Verblendkeramiken verwendet werden kann.

Weiterhin enthält die erfindungsgemäße Glasurmasse einen Masseanteil von 5 bis 10 % Zirkondioxid (ZrO₂), wobei dieser Stabilisatoren wie beispielsweise Y₂O₃, CeO₂ und/oder MgO enthalten kann. Zirkonoxid hat sich insbesondere bei dentalen Gerüstwerkstoffen bewährt und aufgrund seiner mechanischen Eigenschaften mit Stabilisatoren eine wichtige Bedeutung bei der Herstellung von Vollkeramikgerüsten für weitspannige Brücken erlangt.

Beispielsweise kann in der Glasurmasse ein Gehalt von Y₂O₃ und/oder CeO₂ von 1% enthalten sein.

Weiterhin zeichnet sich die erfindungsgemäße Glasurmasse durch einen Masseanteil von 10 bis 30 % Alkalimetalloxiden, wie z. B. Kaliumoxid, Natriumoxid oder Lithiumoxid, einen Masseanteil von 5 bis 10 % von Erdalkalimetalloxiden, wie z. B. Kalziumoxid, Magnesiumoxid und Zinkoxid sowie einen Masseanteil von 0,5 bis 15 % Boroxid aus, ferner 5 bis 10 % Wismutoxid (Bi₂O₃), 1 bis 10 % Phosphor-Pentoxid (P₂O₅), bis zu 5 % Antimonoxid (Sb₂O₃) bis zu 5 % Zinnoxid (SnO₂), bis zu 5 % Titanoxid sowie Hilfsstoffe wie z. B. Pigmente oder Eigenschaftsmodifizierer.

Gemäß einer Ausführungsform weist die Glasurmasse einen Masseanteil von bis zu 7 % Aluminiumoxid auf.

Die erfindungsgemäße Glasurmasse besitzt einen niedrigeren Schmelzpunkt und eine geringere Säurelöslichkeit im Vergleich zu glaskeramischen Werkstoffen des Stands der Technik.

Die Färbung, Fluoreszenz oder Opaleszenz der Keramik kann beeinflusst werden, indem der Zusammensetzung mindestens ein Pigment und/oder ein Opaleszenz fördernder Stoff und/oder ein Fluoreszenz fördernder Stoff beigemischt ist, beispielsweise zu einem Masseanteil von unter 5 %.

Im fertigen Zustand, das heißt aufgetragen und gebrannt auf der Keramikmasse, liegt die erfindungsgemäße Glasurmasse als Glasphase vor. Damit kann die relativ hohe Löslichkeit von Hydroxylapatit, der gemäß eines Aspektes der Erfindung in der Glasurmasse vorhanden sein kann, gegenüber dem natürlichen Zahn gesenkt werden. Eine gegebenenfalls daneben vorhandene Kristallphase kann aus Hydroxylapatit oder aber auch aus anderen Kristallphasen bestehen. Der Herstellungsprozess entscheidet über Art und Ausbildung der Kristallphase.

Im Gegensatz zu den aus dem Stand der Technik bekannten Verbindungen enthält die erfindungsgemäße Glasurmasse keine nennenswerten Anteile Lithiumdisilikat. Gemäß eines Aspektes der Erfindung kann auch die erfindungsgemäße Glasurmasse auf einer Verblendung aufgepresst werden.

Erfindungsgemäß enthält die Glasurmasse einen Anteil von Zirkonoxid (ZrO₂) von 5 bis 10 Massenprozent. Dieser erhöht die Oberflächenstabilität der fertigen Glasur. Zirkon hat sich insbesondere bei dentalen Gerüstwerkstoffen bewährt und prägt auf Grund seiner mechanischen Eigenschaften den metallfreien Markt. Zirkonoxid allerdings setzt die Schmelztemperatur der Glasur hoch. Gemäß eines Aspektes der Erfindung kann die erfindungsgemäße Masse bei Temperaturen unter 850° Celsius gebrannt werden. Dies stellt eine breite Anwendbarkeit sicher. Dies wird überraschenderweise durch die besondere Zusammenstellung der weiteren Komponenten der erfindungsgemäßen Glasurmasse sichergestellt.

Bevorzugt ist als Brenntemperatur ein Temperaturbereich von 750 bis 850 Grad Celsius, besonders bevorzugt eine Brenntemperatur von ungefähr 800 Grad Celsius.

Die erfindungsgemäße Zusammensetzung besitzt einen niedrigen Schmelzpunkt und eine geringe Säurelöslichkeit im Vergleich zu keramischen Werkstoffen vergleichbarer Zusammensetzung.

Es kommen Mineralien hoher Reinheit (Quarz oder Rutil) zum Einsatz. Bevorzugt wird Quarzsand mit Reinheiten > 99 % SiO₂ mit Körnung unter 100 Mikrometern. Andere Mineralien wie Feldspat können Verwendung finden. Auch hier werden hohe Reinheiten bevorzugt (> 90 %). Als Korngröße sind Körnungen unter 100 Mikrometern bevorzugt.

Die Zusammensetzung lässt sich leicht verarbeiten, wenn die Zusammensetzung eine Pulver- oder Pastenform aufweist.

Die erfindungsgemäße Glasurmasse ist im Gegensatz zu Glasurmassen des Stands der Technik mit vielen Dentalkeramikmassen kompatibel und kann deshalb auf verschiedene künstlich hergestellte Keramikzähne aufgebracht werden. Die erfindungsgemäße Glasurmasse ist nicht auf Siliziumdisilikatgerüste beschränkt. Gemäß eines Aspekts der Erfindung wird die Glasurmasse als letzte Schicht auf Verblendungen aufgetragen, um diese dem natürlichen Zahnschmelz anzugleichen.

Gemäß eines weiteren Aspekts der Erfindung kann die erfindungsgemäße Glasurmasse auch direkt auf das zahntechnische Gerüst aufgebracht werden, soweit dies aus klinischen oder zahntechnischen Erwägungen notwendig scheint. Das zahntechnische Gerüst kann eine Metalllegierung oder ein Glas- bzw. Keramiksubstrat sein. Die Glasurmasse kann nicht direkt auf Substrate aufgebrannt werden. Sie ist dazu bestimmt, auf unterschiedliche Verblendkeramiken aufgebracht zu werden.

Die durch die chemische Zusammensetzung der erfindungsgemäßen Glasur erlangten Eigenschaften erlauben es, diese auf verschiedenste Massen aufzubrennen, insbesondere Metallkeramikmassen und Vollkeramikmassen mit unterschiedlichen thermischen Ausdehnungskoeffizienten und Brenntemperaturen.

Gemäß einem Ausführungsbeispiel der vorliegenden Erfindung hat eine Glasurmasse zum Vergüten keramischer Oberflächen die folgende Zusammensetzung:

| | | | |
|---|---|---|---|
| SiO₂ | 30 - 55%, | bevorzugt | 40 - 55% |
| Al₂O₃ | 0 - 7%, | bevorzugt | 3 - 7% |
| R₂O | 10 - 30%, | bevorzugt | 20 - 30% |
| | | z.B. K₂O | 5 - 8% |
| | | Na₂O | 5 - 10% |
| | | Li₂O | 0 - 5% |
| | | | |
| R'O | 5 - 10 % | | |
| | | z.B. CaO | 5 - 10%, |
| | | MgO | 0 - 5% |
| | | ZnO | 0 - 5% |
| B₂O₃ | 0,5 - 15 % | | |
| Bi₂O₃ | 5 - 10 % | | |
| P₂O₅ | 1 - 10 % | | |
| Sb₂O₃ | 0 - 5 % | | |
| SnO₂ | 0 - 5 % | | |
| TiO₂ | 0 - 5 % | | |
| ZrO₂ | 5 - 10 % | | |

Alle Angaben verstehen sich als Massenprozent der Gesamtmasse.

Die erfindungsgemäße Glasurmasse ist im Gegensatz zu den aus dem Stand der Technik bekannten Massen mit vielen Dentalkeramikmassen kompatibel und kann deshalb auf viele künstlich hergestellte Keramikzähne aufgebracht werden. Lithiumdisilikat-Gerüste sind keine zwingende Basis. Gemäß einem Aspekt der Erfindung soll die Glasurmasse nicht direkt auf Substrate, sondern als letzte Schicht auf Verblendungen aufgetragen werden, um diese dem natürlichen Zahnschmelz anzugleichen, ohne jedoch eine lebensdauer-schädliche chemische Löslichkeit aufzuweisen.

Gemäß eines anderen Aspektes der Erfindung kann jedoch die Glasurmasse als letzte Schicht direkt auf das Zahntechnische Gerüst aufgebracht werden, soweit dies aus klinischen oder zahntechnischen Erwägungen nötig erscheint.

Die erfindungsgemäße Glasur, kann auf Metallkeramikmassen, Vollkeramikmassen mit unterschiedlichen thermischen Ausdehnungskoeffizienten und Brenntemperaturen aufgebracht werden.

## Patentansprüche

1. Glasurmasse zum Vergüten von Oberflächen, umfassend die folgenden Bestandteile auf Massenbasis:
30 bis 55 % SiO₂,
0 bis 7 % Al₂O₃,
10 bis 30 % R₂O,
5 bis 10 % R'O,
0,5 bis 15 % B₂O₃,
5 bis 10 % Bi₂O₃,
1 bis 10 % P₂O₅,
0 bis 5 % Sb₂O₃,
0 bis 5 % SnO₂,
0 bis 5 % TiO₂ und
5 bis 10 % ZrO₂,
wobei (R) ein oder mehrere Alkalimetalle und (R') ein oder mehrere zweiwertige Metalle der Gruppe bestehend aus Erdalkalimetallen und Zink ist, und wobei die Glasurmasse durch Zusammenschmelzen oder Sintern der Bestandteile erhalten wird.

2. Glasurmasse gemäß Anspruch 1, **dadurch gekennzeichnet, dass** der Bestandteil umfassend Alkalimetalloxide R₂O 5 bis 8 % K₂O, 5 bis 10 % Na₂O, und/oder 0 bis 5 % Li₂O umfasst, wobei sich diese Angaben als Masseanteil bezogen auf die Gesamtmasse der Glasurmasse verstehen.

3. Glasurmasse gemäß Anspruch 1 oder 2, **dadurch gekennzeichnet, dass** der Anteil an Oxiden zweiwertiger Metalle R'O 5 bis 10 % CaO, 0 bis 5 % MgO und/oder 0 bis 5 % ZnO umfasst, wobei sich diese Angaben als Masseanteil bezogen auf die Gesamtmasse der Glasurmasse verstehen.

4. Glasurmasse gemäß mindestens einem der vorstehenden Ansprüche, **dadurch gekennzeichnet, dass** der Anteil an
SiO₂ 40 bis 55%,
Al₂O₃ 3 bis 7%,
R₂O 20 bis 30%, und
CaO 5 bis 10%
beträgt.

5. Glasurmasse gemäß mindestens einem der vorstehenden Ansprüche, **dadurch gekennzeichnet, dass** Y₂O₃ und / oder CeO₂ enthalten ist.

6. Glasurmasse gemäß mindestens einem der vorstehenden Ansprüche, **dadurch gekennzeichnet, dass** mindestens ein Pigment und/oder ein Opaleszenz fördernder Stoff und/oder ein Fluoreszenz fördernder Stoff beigemischt ist.

7. Verfahren zur Herstellung einer Glasur zum Vergüten von Oberflächen, bei welchem die Bestandteile
30 bis 55 % SiO₂,
0 bis 7 % Al₂O₃,
10 bis 30 % R₂O,
5 bis 10 % R'O,
0,5 bis 15 % B₂O₃,
5 bis 10 % Bi₂O₃,
1 bis 10 % P₂O₅,
0 bis 5 % Sb₂O₃,
0 bis 5 % SnO₂,
0 bis 5 % TiO₂ und
5 bis 10 % ZrO₂,
wobei (R) ein oder mehrere Alkalimetalle und (R') ein oder mehrere zweiwertige Metalle der Gruppe bestehend aus Erdalkalimetallen und Zink ist,
- in fein gekörnter Form als Pulver oder Paste vermengt und auf eine zur Vergütung bestimmte Oberfläche aufgebracht werden,
- das Pulver oder die Paste erhitzt wird, so dass eine Reaktion zwischen den Bestandteilen erfolgt, und bei einer Brenntemperatur auf der zur Vergütung bestimmten Oberfläche aufgebrannt wird
- und anschließend durch Abkühlung die Glasur erhalten wird.

8. Verfahren gemäß Anspruch 7, **dadurch gekennzeichnet, dass** der Bestandteil umfassend Alkalimetalloxide R₂O 5 bis 8 % K₂O, 5 bis 10 % Na₂O, und/oder 0 bis 5 % Li₂O umfasst, wobei sich diese Angaben als Masseanteil bezogen auf die Gesamtmasse der Glasurmasse verstehen.

9. Verfahren gemäß Anspruch 7 oder 8, **dadurch gekennzeichnet, dass** der Anteil an Oxiden zweiwertiger Metalle R'O 5 bis 10 % CaO, 0 bis 5 % MgO und/oder 0 bis 5 % ZnO umfasst, wobei sich diese Angaben als Masseanteil bezogen auf die Gesamtmasse der Glasurmasse verstehen.

10. Verfahren gemäß mindestens einem der vorstehenden Ansprüche 7 bis 9, **dadurch gekennzeichnet, dass** der Bestandteil SiO₂ 40 bis 55%, Al₂O₃ 3 bis 7%, R₂O 20 bis 30%, und CaO 5 bis 10% beträgt.

11. Verfahren gemäß mindestens einem der vorstehenden Ansprüche 7 bis 10, **dadurch gekennzeichnet, dass** Y₂O₃ und / oder CeO₂ enthalten ist.

12. Verfahren gemäß mindestens einem der vorstehenden Ansprüche 7 bis 11, **dadurch gekennzeichnet, dass** die Reinheit des SiO₂ mindestens 99% beträgt.

13. Verfahren gemäß mindestens einem der vorstehenden Ansprüche 7 bis 12, **dadurch gekennzeichnet,dass** die Brenntemperatur 650 bis 900 Grad Celsius beträgt.

14. Verfahren gemäß Anspruch 13, **dadurch gekennzeichnet, dass** die Brenntemperatur 750 bis 850 Grad Celsius beträgt.

15. Verwendung einer Glasurmasse gemäß mindestens einem der Ansprüche 1 bis 6 oder hergestellt nach einem Verfahren gemäß einem der Ansprüche 7 bis 13 zur Herstellung von Zahnersatz.

## Claims

1. A glaze for coating surfaces, comprising the following components by mass:
30 to 55% SiO₂,
0 to 7% Al₂O₃,
10 to 30% R₂O,
5 to 10% R'O,
0.5 to 15% B₂O₃,
5 to 10% Bi₂O₃,
1 to 10% P₂O₅,
0 to 5% Sb₂O₃,
0 to 5% SnO₂,
0 to 5% TiO₂ and
5 to 10% ZrO₂,
wherein (R) is one or several alkali metals and (R') is one or several bivalent metals from the group comprising alkaline earth metals and zinc, and wherein the glaze is obtained by melting or sintering the components.

2. The glaze according to claim 1, wherein the part comprising alkaline metal oxides R₂O comprises 5 to 8% K₂O, 5 to 10% Na₂O, and/or 0 to 5% Li₂O by mass, as percent of the total mass of the glaze.

3. The glaze according to claim 1 or 2, wherein the proportion of bivalent metal oxides R'O comprises 5 to 10% CaO, 0 to 5% MgO and/or 0 to 5% ZnO by mass, as percent of the total mass of the glaze.

4. The glaze according to at least one of the preceding claims, wherein the part of
SiO₂ is 40 to 55%,
Al₂O₃ is 3 to 7%,
R₂O is 20 to 30%, and
CaO is 5 to 10%.

5. The glaze according to at least one of the preceding claims, wherein Y₂O₃ and/or CeO₂ are present.

6. The glaze according to at least one of the preceding claims, wherein at least one pigment and/or a compound promoting opalescence and/or a compound promoting fluorescence is added.

7. A process for the manufacture of a glaze for coating surfaces, whereby the components
30 to 55% SiO₂,
0 to 7% Al₂O₃,
10 to 30% R₂O,
5 to 10% R'O,
0.5 to 15% B₂O₃,
5 to 10% Bi₂O₃,
1 to 10% P₂O₅,
0 to 5% Sb₂O₃,
0 to 5% SnO₂,
0 to 5% TiO₂ and
5 to 10% ZrO₂,
wherein (R) is one or several alkali metals and (R') is one or several bivalent metals from the group comprising alkaline earth metals and zinc,
- are mixed in finely grained form as a powder or paste, and are applied to a surface destined to be coated,
- the powder or paste is heated, so that a reaction occurs between the components and, at a firing temperature is irremovably applied to the surface destined to be coated,
- and then the glaze is obtained by cooling.

8. The process according to claim 7, wherein the part comprising alkaline metal oxides R₂O comprises 5 to 8% K₂O, 5 to 10% Na₂O, and/or 0 to 5% Li₂O by mass, as percent of the total mass of the glaze.

9. The process according to claim 7 or 8, wherein the component of bivalent metal oxides R'O comprises 5 to 10% CaO, 0 to 5% MgO and/or 0 to 5% ZnO by mass, as percent of the total mass of the glaze.

10. The process according to at least one of the preceding claims 7 to 9, wherein the constituent SiO₂ is 40 to 55%, Al₂O₃ is 3 to 7%, R₂O is 20 to 30%, and CaO is 5 to 10%.

11. The process according to at least one of the preceding claims 7 to 10, wherein Y₂O₃ and/or CeO₂ are present.

12. The process according to at least one of the preceding claims 7 to 11, wherein the purity of the SiO₂ is at least 99%.

13. The process according to at least one of the preceding claims 7 to 12, wherein the firing temperature is 650 to 900°C.

14. The process according to claim 13, wherein the firing temperature is 750 to 850°C.

15. The use of a glaze according to at least one of claims 1 to 6 or produced by a process according to any of claims 7 to 13 for manufacturing dentures.

## Revendications

1. Masse de glaçure pour le revêtement de surfaces, comprenant les constituants suivants sur la base de la masse :
30 à 55 % de SiO₂,
0 à 7 % d'Al₂O₃,
10 à 30 % de R₂O,
5 à 10 % de R'O
0,5 à 15 % de B₂O₃,
5 à 10 % de Bi₂O₃,
1 à 10 % de P₂O₅,
0 à 5 % de Sb₂O₃,
0 à 5 % de SnO₂,
0 à 5 % de TiO₂ et
5 à 10 % de ZrO₂,
dans laquelle (R) est un ou plusieurs métaux alcalins et (R') un ou plusieurs métaux bivalents du groupe constitué de métaux alcalino-terreux et de zinc, et dans laquelle la masse de glaçure est obtenue par fonte commune ou frittage des constituants.

2. Masse de glaçure selon la revendication 1, **caractérisée en ce que** le constituant comprenant des oxydes de métaux alcalins R₂O comprend 5 à 8 % de K₂O, 5 à 10 % de Na₂O et/ou 0 à 5 % de Li₂O, dans laquelle ces indications s'entendent comme part de masse par rapport à la masse entière de la masse de glaçure.

3. Masse de glaçure selon la revendication 1 ou 2, **caractérisée en ce que** la part d'oxydes de métaux bivalents R'O comprend 5 à 10 % de CaO, 0 à 5 % de MgO et/ou 0 à 5 % de ZnO, dans laquelle ces indications s'entendent comme part de masse par rapport à la masse entière de la masse de glaçure.

4. Masse de glaçure selon au moins l'une quelconque des revendications précédentes, **caractérisée en ce que** la part de
SiO₂ s'élève de 40 à 55 %,
Al₂O₃ de 3 à 7 %,
R₂O de 20 à 30 % et
CaOde5à10%.

5. Masse de glaçure selon au moins l'une quelconque des revendications précédentes, **caractérisée en ce que** du Y₂O₃ et/ou CeO₂ est contenu.

6. Masse de glaçure selon au moins l'une quelconque des revendications précédentes, **caractérisée en ce qu'**au moins un pigment et/ou une substance favorisant l'opalescence et/ou une substance favorisant la fluorescence est ajoutée.

7. Procédé de fabrication d'une glaçure pour le revêtement de surfaces, pour lequel les constituants
30 à 55 % de SiO₂,
0 à 7 % d'Al₂O₃,
10 à 30 % de R₂O,
5 à 10 % de R'O
0,5 à 15 % de B₂O₃,
5 à 10 % de Bi₂O₃,
1 à 10 % de P₂O₅,
0 à 5 % de Sb₂O₃,
0 à 5 % de SnO₂,
0 à 5 % de TiO₂ et
5 à 10 % de ZrO₂,
dans lequel (R) est un ou plusieurs métaux alcalins et (R') un ou plusieurs métaux bivalents du groupe constitué de métaux alcalino-terreux et de zinc,
- sont mélangés sous la forme de grains fins comme poudre ou pâte et appliqués sur une surface destinée au revêtement,
- la poudre ou la pâte est chauffée de sorte qu'une réaction entre les constituants soit effectuée, et est brûlée à une température de combustion sur la surface destinée au revêtement,
- et ensuite la glaçure est obtenue par refroidissement.

8. Procédé selon la revendication 7, **caractérisé en ce que** le constituant comprenant des oxydes de métaux alcalins R₂O comprend 5 à 8 % de K₂O, 5 à 10 % de Na₂O et/ou 0 à 5 % de Li₂O, dans lequel ces indications s'entendent comme part de masse par rapport à la masse entière de la masse de glaçure.

9. Procédé selon la revendication 7 ou 8, **caractérisé en ce que** la part d'oxydes de métaux bivalents R'O comprend 5 à 10 % de CaO, 0 à 5 % de MgO et/ou 0 à 5 % de ZnO, dans lequel ces indications s'entendent comme part de masse par rapport à la masse entière de la masse de glaçure.

10. Procédé selon au moins l'une quelconque des revendications précédentes 7 à 9, **caractérisé en ce que** le constituant de SiO₂ s'élève de 40 à 55 %, Al₂O₃ de 3 à 7 %, R₂O de 20 à 30 % et CaO de 5 à 10 %.

11. Procédé selon au moins l'une quelconque des revendications précédentes 7 à 10, **caractérisé en ce que** du Y₂O₃ et/ou CeO₂ est contenu.

12. Procédé selon au moins l'une quelconque des revendications précédentes 7 à 11, **caractérisé en ce que** la pureté du SiO₂ s'élève au moins à 99 %.

13. Procédé selon au moins l'une quelconque des revendications précédentes 7 à 12, **caractérisé en ce que** la température de combustion s'élève à 650 à 900 degrés Celsius.

14. Procédé selon la revendication 13, **caractérisé en ce que** la température de combustion s'élève à 750 à 850 degrés Celsius.

15. Utilisation d'une masse de glaçure selon au moins l'une quelconque des revendications 1 à 6 ou fabriquée selon un procédé selon l'une quelconque des revendications 7 à 13 pour la fabrication d'une prothèse dentaire.
